# EUROPEAN PATENT SPECIFICATION

(11) **EP 4 240 964 B1**
(45) Date of publication and mention of the grant of the patent: **19.03.2025**
(21) Application number: 21802715.9
(22) Date of filing: 03.11.2021
(51) Int. Cl.: B63B 35/00, E02D 15/08

(54) **VESSEL AND METHOD FOR UPENDING A MONOPILE OF AN OFFSHORE WIND TURBINE**
SCHIFF UND VERFAHREN ZUM AUFRICHTEN EINES EINPFAHLS EINER OFFSHORE-WINDTURBINE
NAVIRE ET PROCÉDÉ DE LEVAGE D'UN MONOPIEU D'UNE ÉOLIENNE EN MER

(30) Priority: 06.11.2020 NL 2026846
(43) Date of publication of application: 13.09.2023
(73) Proprietor: Itrec B.V., 3115 HH Schiedam (NL)
(72) Inventor: VEHMEIJER, Terence Willem August, 3115 HH Schiedam (NL); BOELENS, Rene Corneille Losiriai, 3115 HH Schiedam (NL)
(74) Representative: EP&C
(86) International application number: PCT/EP2021/080543
(87) International publication number: WO 2022/096523

(56) References cited:
- EP-A1- 3 517 479
- WO-A2-2019/172752
- US-B1- 10 308 327

## Description

The invention relates to a method for upending a monopile of an offshore wind turbine by a crane and a vessel provided for performing such a method.

In a known method for installing an offshore wind turbine having a monopile as its foundation, the monopiles are transported to the installation site on a vessel in a horizontal orientation, with the length thereof perpendicular to the length of the vessel, for example a monohull vessel, e.g. as illustrated in EP 3 575 199.

There is a trend towards large wind turbines, e.g. of at least 4 MW or even more than 10 MW, and a desire to install offshore wind turbines at locations with rather significant water depths. Both result in larger and heavier monopile foundations. Monopiles are planned to be installed that have a length of 100 meters or more, e.g. 120 meters or more. Diameters of the monopile are in the range of e.g. 8 - 12 meters, e.g. 11 meters. The material for the monopile is commonly steel and the wall thickness is, for example, be in the range between 10 and 20 centimetres. The weight of such monopiles may be more than 1000mt, possibly 1300mt or above. Whilst monopile foundations are nowadays seen as efficient, the enormous dimensions and weight pose increasingly high requirements to the cranes and tools used, and increases the complexity and duration of the operation of thereof in the installation process.

The great length of the pile may in practice entails that the upper end thereof is outside of the contour of the upper or main deck when the pile needs to be upended, so the pile protrudes well outside the vessel.

By means of a heavy lift crane and a hoisting tool suspended from the crane the monopile is upended. In known embodiments, upending is done by hoisting the upper end of the monopile while the lower end thereof is being held by a pivoting upending tool, that is mounted on the vessel.

The increasing dimensions of the monopiles complicates the handling and control of the hoisting tool when positioning and connecting the hoisting tool to the upper end of the monopile.

An example of a hoisting tool used for the upending is disclosed in EP3574149. Another example is disclosed in DE202009006507U1.

In the upending process, the hoisting tool is used to retain the upper end of the monopile during the process. Subsequently, the monopile is lowered onto the seabed. It is common to make use of a pile holder onboard the vessel, or pile gripper as this device is commonly called in the field, in order to keep the monopile vertically, e.g. to ensure that the monopile is driven vertically into the seabed during the later pile driving process. In embodiments, the pile gripper also serves as, or is combined with, a pivoting upending tool for the lower end of the monopile.

Before upending the monopile, the hoisting tool has to be connected to the upper end of the monopile. Thereto, it is first positioned relative to the monopile such as to enable it to engage the upper end of the monopile, in order for it to later retain the monopile during upending. This positioning is currently done with the aid of personnel on the deck of the vessel with the aid of manhandled cables that are connected to the hoisting tool.

From WO2020020817 a device is known for upending a monopile with a longitudinal direction from a support surface at an outer end. The device has a support beam which runs substantially parallel to the support surface and is connected to the support surface at a support point. The support beam guides a coupling tool to which a wall part of an outer end of the monopile can be coupled. The coupling tool is displaceable relative to the support surface with the support beam, from a clear position to a coupled position in which the monopile outer end is engaged by the coupling tool.

From WO2020/020821 a coupling tool for connection to an outer end of a monopile for the purpose of upending the element is known. The coupling tool has engaging means with which the outer end of the element can be engaged, and a pivotable lifting member with which the coupling tool can be suspended from a lifting means such as a crane. Resilient arms are further mounted on the coupling tool, which arms can be moved from a starting position to a position against a wall part of the outer end of the element for the purpose of aligning the suspended coupling tool relative to the outer end, and for damping movements of the suspended coupling tool.

Further prior art documents are: EP 3 517 479 A1, WO 2019/172752 A2 and US 10 308 327 B1.

The present invention aims to provide a method and vessel, which enable an alternative way of connecting the hoisting tool to the monopile. This aim is achieved by:
a method for upending a monopile of an offshore wind turbine from a horizontal position on a vessel to an upended vertical position of said monopile, the monopile being supported in the horizontal position by the vessel with the ends thereof extending beyond the vessel; the vessel comprising a crane adapted to support a hoisting tool, which hoisting tool is adapted to be connected to an end of the monopile while being supported by the crane; the vessel further comprising an anti-swing device mounted to the vessel, adapted to prevent swing of the suspended hoisting tool;
the method comprising the steps of:
   a) providing the anti-swing device along the monopile and extending beyond the monopile end;
   b) moving, by means of the crane, the hoisting tool into a proximate position thereof in which the hoisting tool is longitudinally spaced from the monopile end and in which the radial contour of the hoisting tool at least overlaps with the radial contour of the monopile end, in which proximate position the hoisting tool is supported by the crane;
   c) engaging the hoisting tool by the anti-swing device, in the proximate position of the hoisting tool, the anti-swing device thereby preventing swing of the suspended hoisting tool;
   d) moving the suspended hoisting tool from the proximate position into a connection position longitudinally aligned with the monopile end, while the hoisting tool maintains being supported by the crane and engaged by the anti-swing device;
   e) connecting the hoisting tool to the monopile end and suspending the monopile end via the hoisting tool from the crane,
   f) disengaging the hoisting tool from the anti-swing device.
   g) hoisting by means of the crane the monopile end connected to the hoisting tool.

This aim is also achieved by a vessel for upending a monopile of an offshore wind turbine from a horizontal position on the vessel to an upended vertical position of said monopile, the vessel being provided with:
- the monopile supported in the horizontal position by the vessel with ends thereof extending beyond the vessel;
- a crane;
- a hoisting tool which is adapted to be supported by the crane, and adapted to be connected to an end of the monopile while being supported by the crane;
- an anti-swing device mounted to the vessel and adapted to be provided along the monopile and to extend beyond the monopile end; the anti-swing device being adapted to engage the hoisting tool in a proximate position thereof in which the hoisting tool is longitudinally spaced from the monopile end and in which the radial contour of the hoisting tool at least overlaps with the radial contour of the monopile end, in which proximate position the hoisting tool is supported by the crane, the anti-swing device thereby preventing swing of the suspended hoisting tool; the anti-swing device being of a lightweight construction and not equipped to support the weight of the hoisting tool.

An advantage of the claimed method is that the weight of the suspended hoisting tool remains supported by the crane, and is not supported by other means during the process of positioning and connecting the hoisting tool to the monopile end. As a consequence, the anti-swing device is of a lightweight construction and not equipped to support the weight of the hoisting tool.

Preferably, the hoisting tool for the monopile is attached to the crane at a parking position of the hoisting tool. Preferably, at this parking position the hoisting tool is both longitudinally and radially spaced from said monopile end, e.g. the remote position being on a deck of a vessel,

The vessel of the invention is preferably further equipped with a pivoting upending tool engaging the end of the monopile opposite the hoisting tool, to assist the upending process.

There are alternative options to carry out the step of moving the suspended hoisting tool from the proximate position into a connection position longitudinally aligned with the monopile end, while the hoisting tool maintains being supported by the crane and engaged by the anti-swing device.

In embodiments, the anti-swing device comprises a static portion mounted to the vessel and a telescopic portion engaging the hoisting tool, and an actuator allowing movement of the telescopic portion engaging the hoisting tool with respect to the static portion of the anti-swing device. An additional advantage of such a telescopic construction is that it allows a compact transport position.

In alternative embodiments, the anti-swing device comprises an actuator and optionally also a guide, allowing movement of the hoisting tool with respect to the anti-swing device to move the suspended hoisting tool from a proximate position into a gripping position longitudinally aligned with the monopile end, while the hoisting tool maintains being supported by the crane and engaged by the anti-swing device.

In yet alternative embodiments, the anti-swing device comprises an actuator allowing movement of the anti-swing device and the hoisting tool with respect to the vessel. This is e.g. conceivable when the anti-swing device is mounted movable to the vessel, e.g. via a gear rack.

In alternative embodiments, it is conceivable that the hoisting tool itself comprises an actuator allowing movement of the hoisting tool with respect to the anti-swing device, to move the suspended hoisting tool from a proximate position into a gripping position longitudinally aligned with the monopile end, while the hoisting tool maintains being supported by the crane and engaged by the anti-swing device.

In embodiments of the invention, the anti-swing device comprises movable monopile contact points and an actuator allowing movement of the monopile contact points with respect to the remainder of the anti-swing device, and to the vessel. After the provision of the anti-swing device along the monopile and extending beyond the monopile end, a preferred method of the invention includes the step of the actuator moving the monopile contact points from a proximate position into a connected position longitudinally aligned with the monopile end. In the connected position, the contact points prevent movements of the monopile, e.g. vessel induced movements, in particular sway and surge of the vessel. Monopiles are frequently provided with a coating that complicates gripping, also on a support, of the monopile. The additional connection of the contact points of the anti-swing device attribute to fixation of the monopile.

Hence, the anti-swing device both functions to prevent swing of the hoisting tool, and to prevent motions, e.g. caused by sway, of the monopile.

In advantageous embodiments, the monopile contact points are further used as a guide to guide the suspended hoisting tool from the proximate position into the connection position;

In embodiments, the anti-swing device comprises a base which is mounted to the vessel and one or more pivot arms, which are pivotable about a horizontal pivot axis. Preferably, the anti-swing device engages the suspended hoisting tool and optionally also the monopile in a folded-down position.

Advantageously, such a pivotable construction allows the anti-swing device to pivot during hoisting, and as such during the start of the hoisting process to remain engaged with the monopile, e.g. with the monopile contact points, e.g. while the monopile includes an angle of 0-15° with the horizontal. After this initial part of the hoisting process, the monopile is disengaged from the anti-swing device.

Another advantage of the construction with base and pivotable arms is that the anti-swing device can be transported in a vertical position.

In a possible configuration of the anti-swing device, the anti-swing device comprises two parallel arms defining between them a space for the monopile and for the hoisting tool. Optionally, these arms are telescopic arms comprising a static portion mounted to the vessel and a telescopic portion engaging the hoisting tool, as described above.

In a possible configuration, the anti-swing device comprises a base which is mounted to the vessel and one or more pivot arms, wherein the one or more pivot arms are telescopic arms comprising a static portion mounted to the vessel and a telescopic portion engaging the hoisting tool. Preferably the anti-swing device comprises two parallel pivot arms defining between them a space for the monopile and for the hoisting tool.

The present invention further relates to the combination of:
- a hoisting tool which is adapted to be supported by a crane, and adapted to be connected to an end of the monopile while being supported by the crane, for upending the monopile from a horizontal position to an upended vertical position;
- an anti-swing device mounted to the vessel and adapted to be provided along the monopile and to extend beyond the monopile end; the anti-swing device being adapted to engage the hoisting tool in a proximate position thereof in which the hoisting tool is longitudinally spaced from the monopile end and in which the radial contour of the hoisting tool at least overlaps with the radial contour of the monopile end, in which proximate position the hoisting tool is supported by the crane, the anti-swing device thereby preventing swing of the suspended hoisting tool; the anti-swing device being of a lightweight construction and not equipped to support the weight of the hoisting tool.

The present invention further relates to the combination of an anti-swing device adapted to be mounted to a vessel provided with the crane and adapted to be provided along the monopile and to extend beyond the monopile end; the anti-swing device being adapted to engage the hoisting tool in a proximate position thereof in which the hoisting tool is longitudinally spaced from the monopile end and in which the radial contour of the hoisting tool at least overlaps with the radial contour of the monopile end, in which proximate position the hoisting tool is supported by the crane, the anti-swing device thereby preventing swing of the suspended hoisting tool; the anti-swing device being of a lightweight construction and not equipped to support the weight of the hoisting tool.

The anti-swing device advantageously comprises a static portion mounted to the vessel and a telescopic portion engaging the hoisting tool, and an actuator allowing movement of the telescopic portion engaging the hoisting tool with respect to the static portion of the anti-swing device.

Preferably, the anti-swing device comprises two parallel arms defining between them a space for the monopile and for the hoisting tool. Possibly, the arms are interconnected at the distal end opposite the vessel. In embodiments, the arms are telescopic arms comprising a static portion mounted to the vessel and a telescopic portion engaging the hoisting tool. In embodiments are the two parallel arms telescopic arms, having a static portion mounted to the vessel and a telescopic portion engaging the hoisting tool.

Preferably, the anti-swing device comprises a base which is mounted to the vessel and one or more pivot arms, which are pivotable about a horizontal pivot axis. In embodiments, two parallel arms are mounted to the base, e.g. two arms interconnected at the distal end opposite the vessel. In embodiments, the pivot arms are telescopic arms comprising a static portion mounted to the vessel and a telescopic portion engaging the hoisting tool. In embodiments are the two parallel arms telescopic arms, having a static portion mounted to the vessel and a telescopic portion engaging the hoisting tool.

The invention is described in relation to the upending of a monopile. It is envisaged that the method, hoisting tool and anti-swing device of the invention may also be configured to, or applied for, hoisting other wind turbine components than a monopile, e.g. another type of foundation, e.g. a jacket type foundation, e.g. a wind turbine mast, a transition piece, a rotor blade of a wind turbine.

The invention is further elucidated in relation to the drawings, in which:
Fig. 1 shows a vessel according to the invention in cross section, with a monopile and an anti-swing device;
Fig. 2 shows the end of the monopile, a hoisting tool and an alternative embodiment of an anti-swing device;
Fig. 3 is a top view of the configuration of fig. 2;
Figs.4A-10A show consecutive steps of a method of upending according to the invention and an anti-swing device in partial see-through;
Figs. 4B-10B show a partial close up of the steps shown in figs. 4A-10A respectively;
Fig. 11 shows a vessel a vessel according to the invention in cross section, with an anti-swing device;
Fig. 12 shows a vessel according to the invention in cross section, with an anti-swing device in a parking position;
Figs. 13-16 show an anti-swing device in different working positions for engaging monopiles of different lengths;
Fig. 17 shows an axial view in cross section of an anti-swing device and a hoisting tool; and
Fig. 18 shows an axial view in cross section of the anti- swing device of Fig. 17 with the hoisting tool engaging the anti-swing device and coupled with a top end of a monopile.

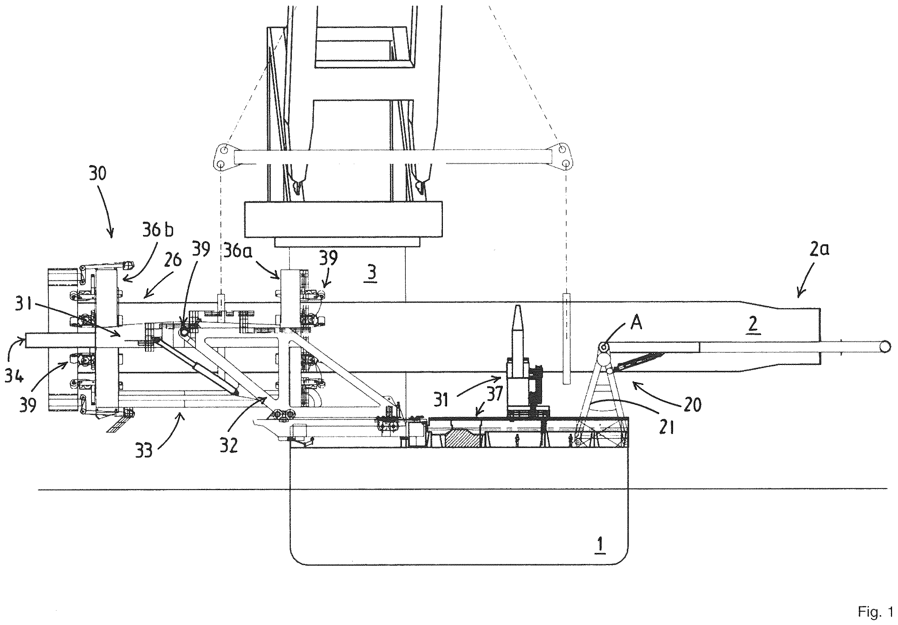

Figure 1 shows in cross section a vessel 1 according to the invention. In the embodiment he vessel is provided with a crane 3, an upending device 30 and an anti-swing device 20.The upending device 30 and the anti-swing device are mounted on the vessel at opposite sides thereof, such that a monopile can be received with one end in the upending device and with one end in the anti-swing device.

Figure 1 depicts the crane 3 lowering a monopile 2 into a starting position, in which the monopile 2 is horizontally supported by the upending 30 device and monopile support 31. The monopile is supported with a top end 2a and a bottom end 2b received in respectively the anti-swing device 20 and the upending device 30.

The upending device 30 is of a type known from the prior art. It is submitted that an anti-swing device according to the invention can be used with different types of upending devices.

The pile upending device 30 comprises a support assembly 32 and a pile holder 33. The pile holder 33 is tiltable mounted on the deck mounted support assembly 32. The pile holder 30 is thus tiltable about a substantially horizontal tilt axis 39 relative to the support assembly 32 between a horizontal orientation, shown in Figure 1, in which the monopile is horizontally supported, and a vertical orientation, in which the monopile is vertically supported, i.e. is upended.

The upending device, more in particular the pile holder 33, comprises a first ring 36a and a second ring 36b for engaging the monopile, a pile holder frame 31 supporting both rings, and a monopile foot end support 34 for engaging and supporting the bottom end 2b of the monopile.

In the exemplary embodiment shown, the second ring 36b is spaced from the first ring 36a, and at a vertical distance when the pile holder 33 is in the vertical orientation.

In the exemplary embodiment shown, both ring 36a and ring 36b comprise multiple pile engaging devices 39 distributed about the circumference of the lower ring 36a and the upper ring 36b respectively.

The foot end support 34 is connected with the pile holder frame 31 such that it is vertically below the two rings 36a,36b, when the pile holder is in the vertical orientation. The pile foot end support 34 is configured to engage with a foot end 2b of a monopile in order to limit longitudinal movement of the pile, at least during upending of the pile.

In the exemplary embodiment shown, the both the ring 36a and the ring 36b each comprise a ring base mounted to the pile holder frame, and two movable, semi-circular jaws. Each jaw is movable between a closed position and an opened position. When the jaws are in the closed position, the ring 36a and the ring 36b each form a closed annulus. When the jaws are in the opened position the ring 36a and the ring 36b each define a pile transfer opening. Thus, when in the opened position, the jaws allow for the pile 2 to be moved in a lateral direction, i.e. in a direction substantially perpendicular to a longitudinal axis of the pile, through the pile transfer opening of the ring 36a and the ring 36b into a position in the pile holder.

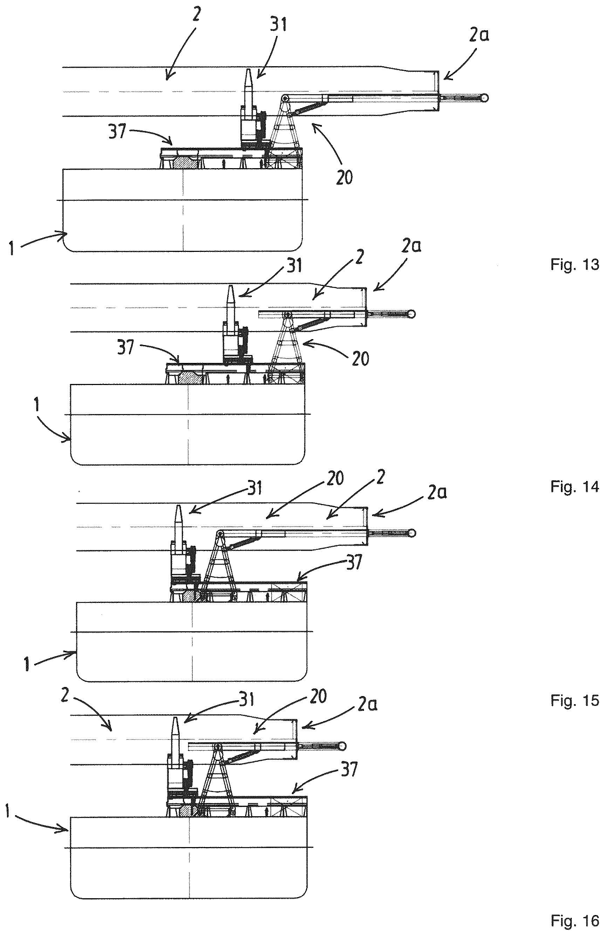

In the exemplary embodiment shown, the monopile support 31 is mounted on a track 37. The track 37 extends along a monopile received in the upending device and the anti-swing device. Thus the positon of the monopile support 31 can be adapted to fit monopiles of different lengths. For example, Figures 13-16 show the anti-swing device 20 and the monopile support in different working positions for respectively engaging and supporting monopiles of different lengths.

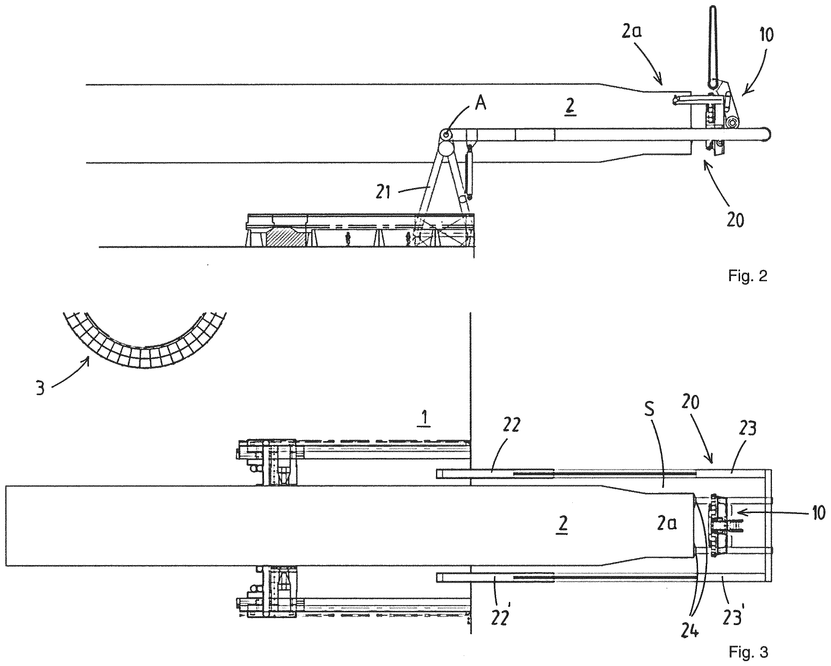

It is submitted that the crane 3, shown supporting the monopile 2 in figure 1, can be used for supporting a hoisting tool 10, see for example figure 2 and figure 3. The hoisting tool 10 is adapted to be supported by the crane, and is adapted to be connected to an end 2a, i.e. the top end of the monopile 2 while being supported by the crane. Thus, the crane 3 can be used for lifting the top end 2a of the monopile 2, for upending the monopile while the bottom end 2b of the monopile is supported in the upending device 30, and for supporting the monopile 2 in a vertical position.

The anti-swing device 20 is mounted to the vessel 1. The anti-swing device is adapted to be provided along the monopile and to extend beyond the monopile end, i.e. the top end 2a of the monopile 2.

The anti-swing device 20 is furthermore adapted to engage the hoisting tool 10 in a proximate position thereof, for example shown in figure 2 and in figure 3. In the proximate position, the hoisting tool 10 is longitudinally spaced from the monopile, more in particular from the top end 2a of the monopile 2, and the radial contour of the hoisting tool 10 at least overlaps with a radial contour of the monopile top end.

In the proximate position, for example shown in figure 2 and figure 3, the hoisting tool is supported by the crane, not shown in figure 2 and figure 3, and is engaged by the anti-swing device. The anti-swing device thereby prevents swing of the suspended hoisting tool.

The anti-swing device 20 is of a lightweight construction and is not equipped to support the weight of the hoisting tool 10.

Figure 2 shows the end of the monopile 2, received in an anti-swing device 20 similar to the anti-swing device depicted in figure 1, while Figure 3 shows a top view of the configuration show in Figure 2. In figure 1 and figure 2 a hoisting tool 10, supported by the crane 3, is shown in the proximate position, in which it is in engagement with the anti-swing device.

The exemplary embodiment of the anti-swing device 20 comprises a static portion 22, 22' mounted to the vessel and a telescopic portion 23, 23' engaging the hoisting tool 10, and an actuator allowing movement of the telescopic portion 23, 23' engaging the hoisting tool 10 with respect to the static portion 22, 22'of the anti-swing device.

The anti-swing device 20 comprises a base 21 is mounted to the vessel and two pivot arms 22, 23; 22', 23', which in the exemplary embodiment shown, are pivotable about a horizontal pivot axis A.

In the exemplary embodiment shown, the two pivot arms of the anti-swing device 20 are parallel arms 22, 23; 22', 23' that define between them a space S for the monopile 2 and for the hoisting tool 10. Furthermore, in the exemplary embodiment shown, the two parallel arms 22, 23; 22', 23' are telescopic arms comprising a static portion mounted to the vessel and a telescopic portion engaging the hoisting tool 10.

Furthermore, in the exemplary embodiment shown, the anti-swing device 20 comprises movable monopile contact points 24 and an actuator 24a allowing movement of the monopile contact points from a proximate position into a connected position longitudinally aligned with the monopile end, prior to connection of the hoisting tool, to prevent movements of the monopile, e.g. vessel induced movements.

In the exemplary embodiment shown, the pivot arms of the anti-swing device 20 are pivotable during the hoisting process to remain engaged with the monopile, e.g. while the monopile includes an angle of 0-15° with the horizontal.

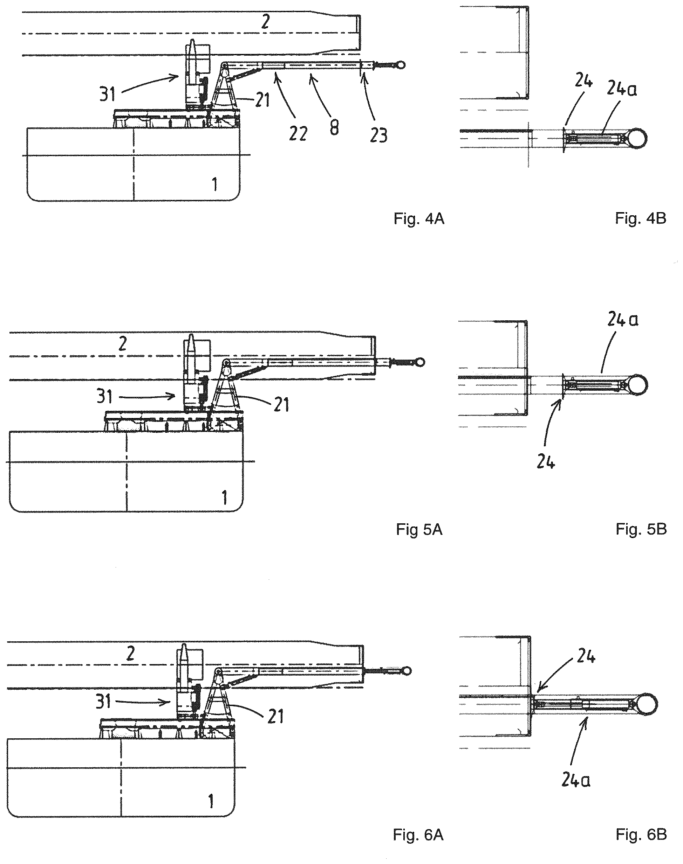

Figures 4A-10A show consecutive steps of a method of upending according to the invention, while Figures 4B-10B show a partial close up of the steps shown in figs. 4A-10A respectively.

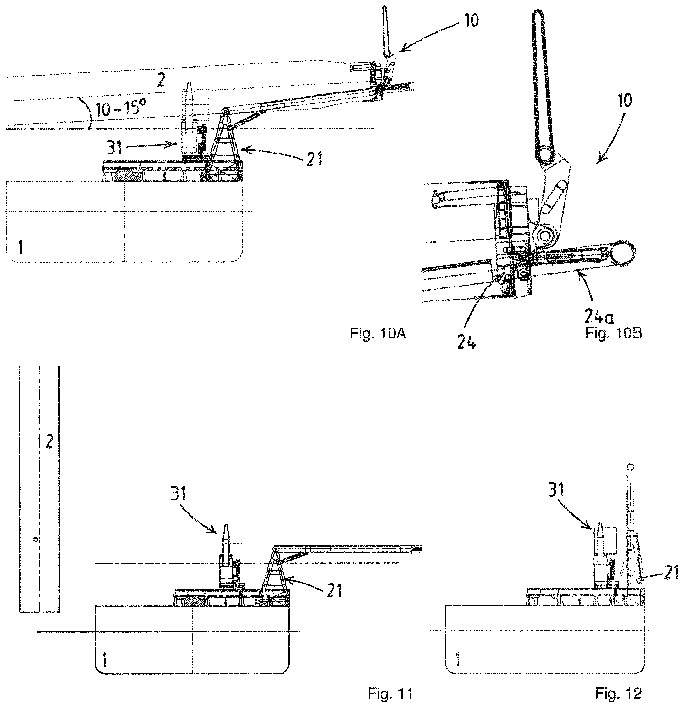

The method comprises upending a monopile 2 of an offshore wind turbine from a horizontal position, shown in Figure 5A, on a vessel 1 to an upended vertical position of said monopile 2, shown in Figure 11.

The figures 4A-10B show part of a monopile, of which the upper end is received in the anti-swing device 20 according to the invention. It is submitted that during the upending process, a bottom end of the monopile 2 is supported in a pile upending device, for example as shown in Figure 1.

The vessel 1, depicted in the figures 4a-12, has a configuration similar to the vessel 1 depicted in Figure 1. The vessel 1 comprises a crane adapted to support a hoisting tool 10, which hoisting tool 10 is adapted to be connected to an end of the monopile 2 while being supported by the crane. The vessel further comprises an anti-swing device 20 mounted to the vessel 1, and adapted to prevent swing of the suspended hoisting tool. The vessel also comprises a pile upending device. It is submitted that the pile upending device and the crane for upending the monopile 2 are not depicted in Figures 4a-Fig 16.

The anti-swing device 20 comprises a comprises a base 21 that is mounted to the vessel 1, and two pivot arms of which one pivot arm 22', 23' is visible. The anti-swing device is furthermore provided with two movable monopile contact points 24 and an actuator 24a, similar to the configuration shown in figure 2 and Figure 3. The actuators 24a, one for each monopile contact point, enables movement of the monopile contact points from a proximate position into a connected position. It is submitted that the pivot arm 22', 23' is depicted in partial see-through. Therefore, one of the monopile contact points 24 and one of the actuators 24a are depicted in Figures 4A-10B.

Figure 4a shows the monopile 2 being lowered by the crane onto the monopile support 31 and into the space S defined between the two pivot arms. In Figures 5A- 9B the monopile 2 is received in the space S. In this configuration, the telescopic arms 22', 23' are longitudinally aligned with the monopile end.

Figure 5a shows the monopile 2 being supported in a horizontal position by the vessel 1, with the ends of the monopile extending beyond the vessel 1. The partial see-though in Figure 5B shows that the monopile contact points 24, in the embodiment shown each supported by an actuators 24a in the form of telescopic actuators, for example hydraulic cylinders or electric spindles, for engaging the monopile 2, do not yet engage the monopile.

The actuators 24a, one for each monopile contact point, enable movement of the monopile contact points 24 from a proximate position, depicted in Figure 5a and figure 5B, into a connected position, depicted in Figure 6a and figure 6B.

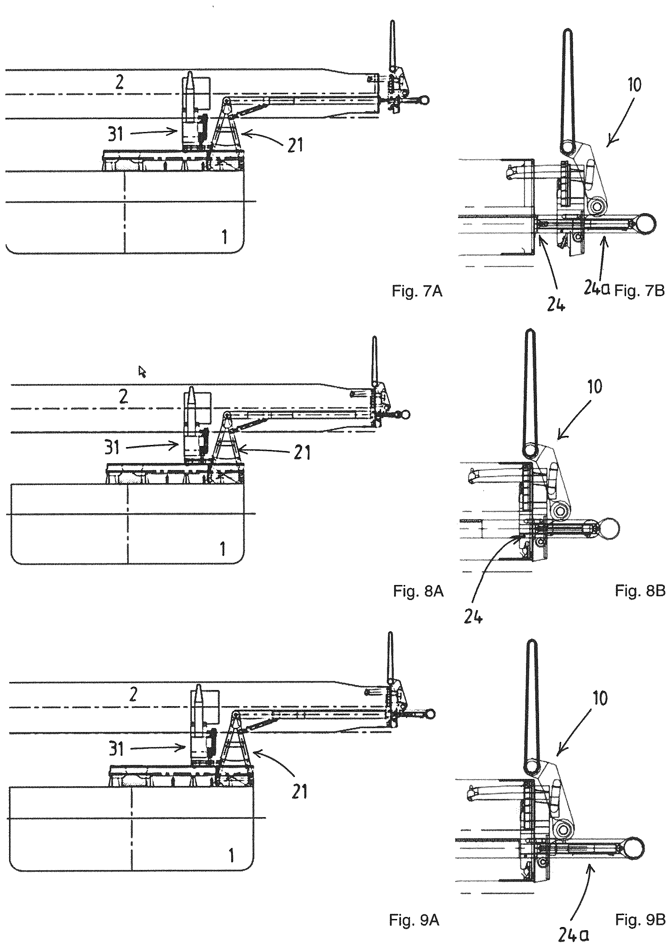

The method furthermore comprises moving, by means of the crane, the hoisting tool 10 into a proximate position thereof, shown in figure 7A and figure 7B. When in the proximal position, the hoisting tool 10 is longitudinally spaced from the monopile end 2a. Furthermore, the anti-swing device, by engaging the hoisting tool 10 in the proximate position, aids in positioning the hoisting tool with a radial contour of the hoisting tool at least overlapping with the radial contour of the monopile end. It is submitted that in the proximate position the hoisting tool is supported by the crane, and that the anti-swing device is of a lightweight construction not equipped to support the weight of the hoisting tool. Furthermore, engaging the hoisting tool 10 by the anti-swing device 20, in the proximate position of the hoisting tool, prevents swing of the suspended hoisting tool.

Subsequently, the suspended hoisting tool 10 is moved from the proximate position into a connection position, shown in Figure 8a and Figure 8B. In the connection position the hoisting tool 10 is longitudinally aligned with the monopile end. The hoisting tool maintains being supported by the crane and engaged by the anti-swing device while it is moved from the proximate position into a connection position.

When in the connection position, the hoisting tool 10 is connected to the monopile end 2a, and the monopile 2, more in particular the top end 2a of the monopile 2, is suspend via the hoisting tool from the crane. Figures 10a and 10b show the top end 2A of the monopile being suspended by the hoisting tool 10.

In the exemplary embodiment of the method depicted in the Figures 4A-10B, prior to suspending the top end 2a of the monopile 2, and thus prior to upending the monopile 2, the telescopic arms 22', 23' are extended, and the telescopic actuators are extended. This allows for the contact points 24 to engage the top end 2a of the monopile 2 while the telescopic actuators 24a are in the extended position. This condition is shown in figure 9A and figure 9B. It is submitted that in combination with the pivotable supported telescopic arms 22', 23', this condition of the telescopic actuators 24a allows for the contact points 24a to keep in engagement with the top end 2a of the pile 2, while the pile is being lifted along a first part of an upending trajectory. This is depicted in figure 10a and Figure 10B. the monopile is upended by the crane lifting the top end 2a of the monopile 2, while the bottom end of the monopile 2 is pivotable supported by the upending device. The monopile is thus pivoted about the pivot axis defined by the upending device. Therefore, the telescopic actuators 24a are retracted while the contact points 34 move with, and engage, the top end of the monopile 2. This configuration allows for the anti-swing device to prevent, or at least reduce, axial movement of the mono pile relative to the upending device while the pile is lifted from the monopile support 31. It is submitted that the anti-sing device preferably is configured to enable the contact points 24 to remain in contact with the top end of the monopile until the monopile is at least upended over angle of 5 degrees, more preferably of at least 10 degrees, for example 15 degrees.

As an alternative, or in addition, to the telescopic actuators 24A of the contact points 24 being retracted, the telescopic arms 22', 23' of the anti-swing device can be extended during the lifting of the monopile 2 to allow for the contact points to restrain the monopile, i.e. to prevent or at least reduce axial movement of the monopile.

After the monopile is lifted over the initial part of the upending trajectory, for example is pivoted over an angle of 12 degrees, or in an alternative method prior to the monopile to be lifted, the contact points disengage the top end of the monopile.

After disengaging the contact points 24, the hoisting tool 10 is disengaged from the anti-swing device. The monopile is subsequently upended by means of the crane into a vertical position, shown in Figure 11.

Figure 12 shows the vessel 1 in cross section, with the anti-swing device in a parking position. In this parking position, the pivotable supported telescopic arms 22', 23'are in an upright position. This configuration provides the anti-swing device with a minimal footprint on the deck of the vessel, when the anti-swing device is not in use. Furthermore, in the parking position the pivot arms are retracted within the contour of the vessel, which is for example beneficial when the vessel is docking in a harbour, or is in close proximity of other ships or objects.

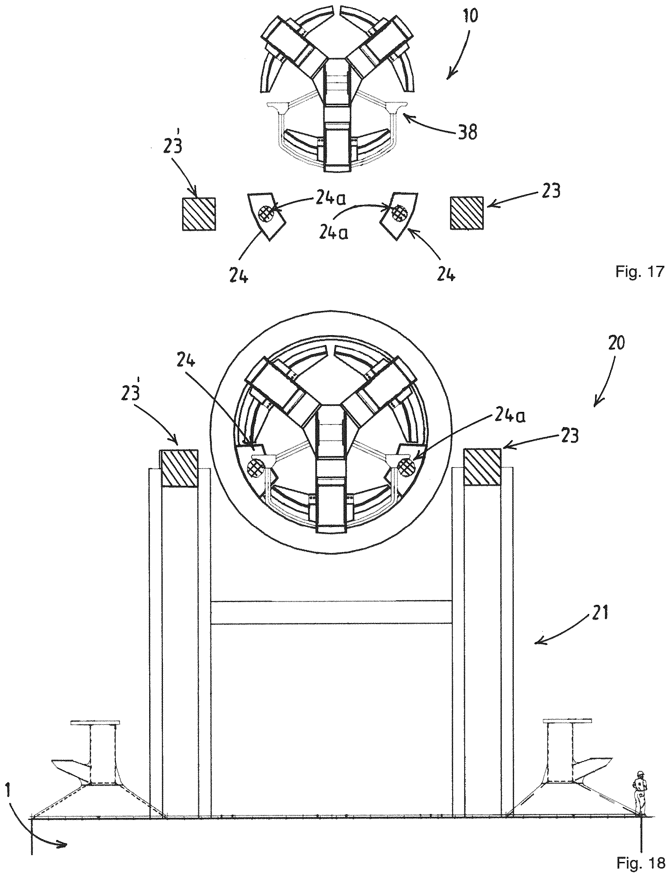

Figure 17 and figure 18 each show an axial view in cross section of an anti-swing device 20 and a hoisting tool 10. The parallel arms 22, 23; 22', 23' and the actuators 24 are depicted in cross section.

Figure 17 shows the hoisting tool 10 while being lowered towards the anti-swing device 20. In the exemplary embodiment shown, the hoisting tool is provided with guide bumpers 38 configured for guiding a lower part of the hoisting tool 10 between the parallel arms 22, 23; 22', 23' of the anti-swing device, more in particular between the parallel actuators 24 of the anti-swing device.

Figure 18 shows the hoisting tool 10 engaging the anti-swing device, more in particular the actuators 24 of the anti-swing device 10, such that the hoisting tool is aligned with the top end of the monopile and can be coupled with a top end of a monopile.

## Claims

1. Method for upending a monopile of an offshore wind turbine from a horizontal position on a vessel to an upended vertical position of said monopile, the monopile being supported in the horizontal position by the vessel with the ends thereof extending beyond the vessel; the vessel comprising a crane (3) adapted to support a hoisting tool (10), which hoisting tool is adapted to be connected to an end of the monopile while being supported by the crane; the vessel further comprising an anti-swing device (20) mounted to the vessel, adapted to prevent swing of the suspended hoisting tool;
the method comprising the steps of:
a) providing the anti-swing device along the monopile and extending beyond the monopile end;
b) moving, by means of the crane, the hoisting tool into a proximate position thereof in which the hoisting tool is longitudinally spaced from the monopile end and in which the radial contour of the hoisting tool at least overlaps with the radial contour of the monopile end, in which proximate position the hoisting tool is supported by the crane;
c) engaging the hoisting tool by the anti-swing device, in the proximate position of the hoisting tool, the anti-swing device thereby preventing swing of the suspended hoisting tool;
d) moving the suspended hoisting tool from the proximate position into a connection position longitudinally aligned with the monopile end, while the hoisting tool maintains being supported by the crane and engaged by the anti-swing device;
e) connecting the hoisting tool to the monopile end and suspending the monopile end via the hoisting tool from the crane,
f) disengaging the hoisting tool from the anti-swing device,
g) hoisting by means of the crane the monopile end connected to the hoisting tool.

2. Method according to claim 1, wherein the anti-swing device comprises a static portion mounted to the vessel and a telescopic portion engaging the hoisting tool, and an actuator allowing movement of the telescopicportion engaging the suspended hoisting tool with respect to the static portion of the anti-swing device from the proximate position into the connection position longitudinally aligned with the monopile end.

3. Method according to claim 1 or 2, wherein the anti-swing device comprises movable monopile contact points and an actuator allowing movement of the monopile contact points and wherein after step a) the actuator moves the monopile contact points from a proximate position into a connected position longitudinally aligned with the monopile end, to prevent movements of the monopile, e.g. vessel induced movements.

4. Method according to any of the preceding claims, wherein the anti-swing device comprises a base which is mounted to the vessel and one or more pivot arms, which are pivotable about a horizontal pivot axis, allowing the anti-swing device during the start of the hoisting process to remain engaged with the monopile, e.g. while the monopile includes an angle of 0-15° with the horizontal.

5. Vessel (1) for upending a monopile (2) of an offshore wind turbine from a horizontal position on the vessel to an upended vertical position of said monopile, the vessel being provided with:
- the monopile supported in the horizontal position by the vessel with ends (2a, 2b) thereof extending beyond the vessel;
- a crane (3);
- a hoisting tool (10) which is adapted to be supported by the crane, and adapted to be connected to an end (2a) of the monopile while being supported by the crane;
- an anti-swing device (20) mounted to the vessel and adapted to be provided along the monopile and to extend beyond the monopile end; the anti-swing device being adapted to engage the hoisting tool in a proximate position thereof in which the hoisting tool is longitudinally spaced from the monopile end and in which the radial contour of the hoisting tool at least overlaps with the radial contour of the monopile end, in which proximate position the hoisting tool is supported by the crane, the anti-swing device thereby preventing swing of the suspended hoisting tool; the anti-swing device being of a lightweight construction and not equipped to support the weight of the hoisting tool.

6. Vessel according to claim 5, wherein the anti-swing device (20) comprises a static portion (22, 22') mounted to the vessel and a telescopic portion (23, 23') engaging the hoisting tool (10), and an actuator allowing movement of the telescopic portion engaging the hoisting tool with respect to the static portion of the anti-swing device.

7. Vessel according to claim 5 or 6, wherein the anti-swing device comprises two parallel arms (22, 23; 22', 23') defining between them a space (S) for the monopile (2) and for the hoisting tool (10), e.g. wherein the arms are telescopic arms comprising a static portion mounted to the vessel and a telescopic portion engaging the hoisting tool.

8. Vessel according to any of claims 5-7, wherein the anti-swing device comprises movable monopile contact points (24) and an actuator (24a) allowing movement of the monopile contact points from a proximate position into a connected position longitudinally aligned with the monopile end, prior to connection of the hoisting tool, to prevent movements of the monopile, e.g. vessel induced movements.

9. Vessel according to any of claims 5-8, wherein the anti-swing device comprises a base (21) which is mounted to the vessel and one or more pivot arms (22, 23; 22', 23'), which are pivotable about a horizontal pivot axis (A).

10. Vessel according to claims 8 and 9, wherein the one or more pivot arms of the anti-swing device are pivotable during the hoisting process to remain engaged with the monopile, e.g. while the monopile includes an angle of 0-15° with the horizontal.

11. An anti-swing device according to claim 12 being mounted to a vessel, and combined with a hoisting tool which is adapted to be supported by a crane, and adapted to be connected to an end of the monopile while being supported by the crane, for upending the monopile from a horizontal position to an upended vertical position.

12. Anti-swing device (20) adapted to be mounted to a vessel for upending a monopile (2) of an offshore wind turbine from a horizontal position on the vessel to an upended vertical position of said monopile, according to any of the method claims 1-4, the vessel being provided with a crane; **characterised by** the following features: the anti-swing device being adapted to be provided along the monopile and to extend beyond the monopile end; the anti-swing device being adapted to engage a hoisting tool in a proximate position thereof in which the hoisting tool is longitudinally spaced from the monopile end and in which the radial contour of the hoisting tool at least overlaps with the radial contour of the monopile end, in which proximate position the hoisting tool is supported by the crane, the anti-swing device thereby preventing swing of the suspended hoisting tool; the anti-swing device being of a lightweight construction and not equipped to support the weight of the hoisting tool.

## Patentansprüche

1. Verfahren zum Aufrichten eines Monopiles einer Offshore-Windenergieanlage von einer horizontalen Position auf einem Schiff in eine aufgerichtete vertikale Position des Monopiles, wobei der Monopile in der horizontalen Position vom Schiff getragen wird, wobei sich dessen Enden über das Schiff hinaus erstrecken; wobei das Schiff einen Kran (3) umfasst, der dazu eingerichtet ist, ein Hebewerkzeug (10) zu tragen,
wobei das Hebewerkzeug dazu eingerichtet ist, mit einem Ende des Monopiles verbunden zu sein, während es vom Kran getragen wird; wobei das Schiff ferner eine am Schiff montierte Anti-Schwenk-Vorrichtung (20) umfasst, die dazu eingerichtet ist, das Verschwenken des hängenden Hebewerkzeugs zu verhindern;
wobei das Verfahren die folgenden Schritte umfasst:
a) Vorsehen der Anti-Schwenk-Vorrichtung entlang des Monopiles und über das Monopile-Ende hinaus erstreckend;
b) Bewegen des Hebewerkzeugs mittels des Krans in eine proximale Position, in welcher das Hebewerkzeug von dem Monopile-Ende in Längsrichtung beabstandet ist und in welcher die radiale Kontur des Hebewerkzeugs die radiale Kontur des Monopile-Endes zumindest überlagert, wobei das Hebewerkzeug in der proximalen Position vom Kran getragen wird;
c) Eingreifen der Anti-Schwenk-Vorrichtung in das Hebewerkzeug in der proximalen Position des Hebewerkzeugs, wobei die Anti-Schwenk-Vorrichtung dadurch das Verschwenken des hängenden Hebewerkzeugs verhindert;
d) Bewegen des hängenden Hebewerkzeugs von der proximalen Position in eine Verbindungsposition, die in Längsrichtung mit dem Monopile-Ende ausgerichtet ist, während das Hebewerkzeug weiterhin vom Kran getragen und von der Anti-Schwenk-Vorrichtung eingegriffen wird;
e) Verbinden des Hebewerkzeugs mit dem Monopile-Ende und Aufhängen des Monopile-Endes über das Hebewerkzeug am Kran,
f) Lösen des Hebewerkzeugs von der Anti-Schwenk-Vorrichtung,
g) Anheben des mit dem Hebewerkzeug verbundenen Monopile-Endes mittels des Krans.

2. Verfahren nach Anspruch 1, wobei die Anti-Schwenk-Vorrichtung einen am Schiff montierten statischen Abschnitt und einen in das Hebewerkzeug eingreifenden Teleskopabschnitt und ein Stellglied, das die Bewegung des in das hängende Hebewerkzeug eingegriffenen Teleskopabschnitts in Bezug zum statischen Abschnitt der Anti-Schwenk-Vorrichtung von der proximalen Position in die mit dem Monopile-Ende in Längsrichtung ausgerichtete Verbindungsposition zulässt, umfasst.

3. Verfahren nach Anspruch 1 oder 2, wobei die Anti-Schwenk-Vorrichtung bewegliche Monopile-Kontaktpunkte und ein Stellglied, das die Bewegung der Monopile-Kontaktpunkte zulässt, umfasst und wobei das Stellglied nach Schritt a) die Monopile-Kontaktpunkte von einer proximalen Position in eine mit dem Monopile-Ende in Längsrichtung ausgerichtete Verbindungsposition bewegt, um Bewegungen des Monopiles, z. B. vom Schiff eingeleitete Bewegungen, zu verhindern.

4. Verfahren nach einem der vorstehenden Ansprüche, wobei die Anti-Schwenk-Vorrichtung einen am Schiff montierten Sockel und einen oder mehrere Schwenkarme, die um eine horizontale Schwenkachse schwenkbar sind, umfasst, wodurch zugelassen wird, dass die Anti-Schwenk-Vorrichtung beim Start des Hebevorgangs in den Monopile eingegriffen bleibt, z. B. während der Monopile einen Winkel von 0-15° zur Horizontalen aufweist.

5. Schiff (1) zum Aufrichten eines Monopiles (2) einer Offshore-Windenergieanlage von einer horizontalen Position auf dem Schiff in eine aufgerichtete vertikale Position des Monopiles, wobei das Schiff mit Folgendem versehen ist:
- dem Monopile, der in der horizontalen Position vom Schiff getragen wird, wobei sich dessen Enden (2a, 2b) über das Schiff hinaus erstrecken;
- einem Kran (3);
- einem Hebewerkzeug (10), das dazu eingerichtet ist, vom Kran getragen zu werden, und dazu eingerichtet ist, mit einem Ende (2a) des Monopiles verbunden zu sein, während es vom Kran getragen wird;
- einer Anti-Schwenk-Vorrichtung (20), die am Schiff montiert und dazu eingerichtet ist, entlang des Monopiles vorgesehen zu sein und sich über das Monopile-Ende hinaus zu erstrecken; wobei die Anti-Schwenk-Vorrichtung dazu eingerichtet ist, in das Hebewerkzeug in einer proximalen Position, in welcher das Hebewerkzeug in Längsrichtung vom Monopile-Ende beabstandet ist und in welcher die radiale Kontur des Hebewerkzeugs die radiale Kontur des Monopile-Endes zumindest überlagert, einzugreifen, wobei das Hebewerkzeug in der proximalen Position vom Kran getragen wird, wobei die Anti-Schwenk-Vorrichtung dabei das Verschwenken des hängenden Hebewerkzeugs verhindert; wobei die Anti-Schwenk-Vorrichtung aus einer Leichtbaukonstruktion besteht und nicht dazu ausgestattet ist, das Gewicht des Hebewerkzeugs zu tragen.

6. Schiff nach Anspruch 5, wobei die Anti-Schwenk-Vorrichtung (20) einen am Schiff montierten statischen Abschnitt (22, 22') und einen in das Hebewerkzeug (10) eingreifenden Teleskopabschnitt (23, 23') und ein Stellglied, das die Bewegung des in das Hebewerkzeug eingegriffenen Teleskopabschnitts in Bezug zum statischen Abschnitt der Anti-Schwenk-Vorrichtung zulässt, umfasst.

7. Schiff nach Anspruch 5 oder 6, wobei die Anti-Schwenk-Vorrichtung zwei parallele Arme (22, 23; 22', 23') umfasst, die dazwischen einen Zwischenraum (S) für den Monopile (2) und für das Hebewerkzeug (10) definieren, z. B. wobei die Arme Teleskoparme sind, die einen am Schiff montierten statischen Abschnitt und einen in das Hebewerkzeug eingreifenden Teleskopabschnitt umfassen.

8. Schiff nach einem der Ansprüche 5-7, wobei die Anti-Schwenk-Vorrichtung bewegliche Monopile-Kontaktpunkte (24) und ein Stellglied (24a), das die Bewegung der Monopile-Kontaktpunkte von einer proximalen Position in eine mit dem Monopile-Ende in Längsrichtung ausgerichtete verbundene Position vor der Verbindung mit dem Hebewerkzeug zulässt, um die Bewegung des Monopiles, z. B. vom Schiff eingeleitete Bewegungen, zu verhindern, umfasst.

9. Schiff nach einem der Ansprüche 5-8, wobei die Anti-Schwenk-Vorrichtung einen am Schiff montierten Sockel (21) und einen oder mehrere Schwenkarme (22, 23; 22', 23'), die um eine horizontale Schwenkachse (A) schwenkbar sind, umfasst.

10. Schiff nach Anspruch 8 und 9, wobei der eine oder die mehreren Schwenkarme der Anti-Schwenk-Vorrichtung während des Hebevorgangs schwenkbar sind, um in den Monopile eingegriffen zu bleiben, z. B. während der Monopile einen Winkel von 0-15° zur Horizontalen aufweist.

11. Anti-Schwenk-Vorrichtung nach Anspruch 12, die auf einem Schiff montiert ist und mit einem Hebewerkzeug kombiniert ist, das dazu eingerichtet ist, von einem Kran getragen zu werden, und dazu eingerichtet ist, mit einem Ende des Monopiles verbunden zu sein, während es vom Kran getragen wird, um den Monopile von einer horizontalen Position in eine aufgerichtete vertikale Position aufzurichten.

12. Anti-Schwenk-Vorrichtung (20), die dazu eingerichtet ist, auf einem Schiff zum Aufrichten eines Monopiles (2) einer Offshore-Windenergieanlage von einer horizontalen Position auf dem Schiff in eine aufgerichtete vertikale Position des Monopiles nach einem der Verfahrensansprüche 1-4 montiert zu sein, wobei das Schiff mit einem Kran versehen ist; **gekennzeichnet durch** die folgenden Merkmale:
die Anti-Schwenk-Vorrichtung ist dazu eingerichtet, entlang des Monopiles vorgesehen zu sein und sich über das Monopile-Ende hinaus zu erstrecken; wobei die Anti-Schwenk-Vorrichtung dazu eingerichtet ist, in ein Hebewerkzeug in einer proximalen Position, in welcher das Hebewerkzeug in Längsrichtung vom Monopile-Ende beabstandet ist und in welcher die radiale Kontur des Hebewerkzeugs die radiale Kontur des Monopile-Endes zumindest überlagert, einzugreifen, wobei das Hebewerkzeug in der proximalen Position vom Kran getragen wird, wobei die Anti-Schwenk-Vorrichtung dabei das Verschwenken des hängenden Hebewerkzeugs verhindert; wobei die Anti-Schwenk-Vorrichtung aus einer Leichtbaukonstruktion besteht und nicht dazu ausgestattet ist, das Gewicht des Hebewerkzeugs zu tragen.

## Revendications

1. Procédé de relevage d'un monopieu d'une éolienne en mer d'une position horizontale sur un navire à une position verticale relevée dudit monopieu, le monopieu étant soutenu dans la position horizontale par le navire, ses extrémités s'étendant au-delà du navire ; le navire comportant une grue (3) prévue pour soutenir un outil (10) de levage,
ledit outil de levage étant prévu pour être relié à une extrémité du monopieu tout en étant soutenu par la grue ; le navire comportant en outre un dispositif anti-balancement (20) monté sur le navire, prévu pour empêcher le balancement de l'outil de levage suspendu ;
le procédé comportant les étapes consistant à :
a) mettre en place le dispositif anti-balancement le long du monopieu et s'étendant au-delà de l'extrémité du monopieu ;
b) amener, au moyen de la grue, l'outil de levage dans une position de proximité de celui-ci, dans laquelle l'outil de levage est espacé longitudinalement par rapport à l'extrémité du monopieu et dans laquelle le contour radial de l'outil de levage chevauche au moins le contour radial de l'extrémité du monopieu, l'outil de levage étant soutenu par la grue dans ladite position de proximité ;
c) faire agir le dispositif anti-balancement sur l'outil de levage, dans la position de proximité de l'outil de levage, le dispositif anti-balancement empêchant ainsi le balancement de l'outil de levage suspendu ;
d) amener l'outil de levage suspendu de la position de proximité à une position de raccordement alignée longitudinalement avec l'extrémité du monopieu, tandis que l'outil de levage continue à être soutenu par la grue et soumis à l'action du dispositif anti-balancement ;
e) relier l'outil de levage à l'extrémité du monopieu et suspendre l'extrémité du monopieu à la grue par l'intermédiaire de l'outil de levage,
f) désolidariser l'outil de levage du dispositif anti-balancement,
g) soulever au moyen de la grue l'extrémité du monopieu reliée à l'outil de levage.

2. Procédé selon la revendication 1, le dispositif anti-balancement comportant une partie statique montée sur le navire et une partie télescopique agissant sur l'outil de levage, et un actionneur permettant un mouvement de la partie télescopique agissant sur l'outil de levage suspendu par rapport à la partie statique du dispositif anti-balancement de la position de proximité à la position de raccordement alignée longitudinalement avec l'extrémité du monopieu.

3. Procédé selon la revendication 1 ou 2, le dispositif anti-balancement comportant des points de contact mobiles de monopieu et un actionneur permettant un mouvement des points de contact de monopieu et, après l'étape a) l'actionneur déplaçant les points de contact de monopieu d'une position de proximité à une position raccordée alignée longitudinalement avec l'extrémité du monopieu, pour empêcher des mouvements du monopieu, p.ex. des mouvements induits par le navire.

4. Procédé selon l'une quelconque des revendications précédentes, le dispositif anti-balancement comportant un socle qui est monté sur le navire et un ou plusieurs bras sur pivot, qui peuvent pivoter autour d'un axe de pivot horizontal, permettant au dispositif anti-balancement pendant le début du processus de levage de rester en interaction avec le monopieu, p.ex. pendant que le monopieu forme un angle de 0 à 15° avec l'horizontale.

5. Navire (1) destiné à relever un monopieu (2) d'une éolienne en mer d'une position horizontale sur le navire à une position verticale relevée dudit monopieu, le navire étant muni :
- du monopieu soutenu dans la position horizontale par le navire, ses extrémités (2a, 2b) s'étendant au-delà du navire ;
- d'une grue (3) ;
- d'un outil (10) de levage qui est prévu pour être soutenu par la grue, et prévu pour être relié à une extrémité (2a) du monopieu tout en étant soutenu par la grue ;
- d'un dispositif anti-balancement (20) monté sur le navire et prévu pour être placé le long du monopieu et pour s'étendre au-delà de l'extrémité du monopieu ; le dispositif anti-balancement étant prévu pour agir sur l'outil de levage dans une position de proximité de celui-ci, dans laquelle l'outil de levage est espacé longitudinalement par rapport à l'extrémité du monopieu et dans laquelle le contour radial de l'outil de levage chevauche au moins le contour radial de l'extrémité du monopieu, l'outil de levage étant soutenu par la grue dans ladite position de proximité, le dispositif anti-balancement empêchant ainsi le balancement de l'outil de levage suspendu ; le dispositif anti-balancement étant de construction légère et n'étant pas équipé pour supporter le poids de l'outil de levage.

6. Navire selon la revendication 5, le dispositif anti-balancement (20) comportant une partie statique (22, 22') monté sur le navire et une partie télescopique (23, 23') agissant sur l'outil (10) de levage, et un actionneur permettant un mouvement de la partie télescopique agissant sur l'outil de levage par rapport à la partie statique du dispositif anti-balancement.

7. Navire selon la revendication 5 ou 6, le dispositif anti-balancement comportant deux bras parallèles (22, 23 ; 22', 23') définissant entre eux un espace (S) pour le monopieu (2) et pour l'outil (10) de levage, les bras étant p.ex. des bras télescopiques comportant une partie statique montée sur le navire et une partie télescopique agissant sur l'outil de levage.

8. Navire selon l'une quelconque des revendications 5 à 7, le dispositif anti-balancement comportant des points (24) de contact mobiles de monopieu et un actionneur (24a) permettant un mouvement des points de contact de monopieu d'une position de proximité à une position raccordée alignée longitudinalement avec l'extrémité du monopieu, avant le raccordement de l'outil de levage, pour empêcher des mouvements du monopieu, p.ex. des mouvements induits par le navire.

9. Navire selon l'une quelconque des revendications 5 à 8, le dispositif anti-balancement comportant un socle (21) qui est monté sur le navire et un ou plusieurs bras (22, 23 ; 22', 23') sur pivot, qui peuvent pivoter autour d'un axe de pivot horizontal (A).

10. Navire selon les revendications 8 et 9, le ou les bras sur pivot du dispositif anti-balancement pouvant pivoter pendant le processus de levage pour rester en interaction avec le monopieu, p.ex. pendant que le monopieu forme un angle de 0 à 15° avec l'horizontale.

11. Dispositif anti-balancement selon la revendication 12, celui-ci étant monté sur un navire, et combiné avec un outil de levage qui est prévu pour être soutenu par une grue, et prévu pour être relié à une extrémité du monopieu tout en étant soutenu par la grue, afin de relever le monopieu d'une position horizontale à une position verticale relevée.

12. Dispositif anti-balancement (20) prévu pour être monté sur un navire destiné à relever un monopieu (2) d'une éolienne en mer d'une position horizontale sur le navire à une position verticale relevée dudit monopieu, selon l'une quelconque des revendications 1 à 4 de procédé, le navire étant muni d'une grue ; **caractérisé par** les attributs suivants :
le dispositif anti-balancement est prévu pour être placé le long du monopieu et pour s'étendre au-delà de l'extrémité du monopieu ; le dispositif anti-balancement est prévu pour agir sur un outil de levage dans une position de proximité de celui-ci, dans laquelle l'outil de levage est espacé longitudinalement par rapport à l'extrémité du monopieu et dans laquelle le contour radial de l'outil de levage chevauche au moins le contour radial de l'extrémité du monopieu, l'outil de levage étant soutenu par la grue dans ladite position de proximité, le dispositif anti-balancement empêchant ainsi le balancement de l'outil de levage suspendu ; le dispositif anti-balancement est de construction légère et n'est pas équipé pour supporter le poids de l'outil de levage.
